# EUROPEAN PATENT SPECIFICATION

(11) **EP 0 500 915 B1**
(45) Date of publication and mention of the grant of the patent: **02.02.2000**
(21) Application number: 91918179.2
(22) Date of filing: 17.09.1991
(51) Int. Cl.: G06F 12/06

(54) **Method of configuring a memory system**
Verfahren zum Konfigurieren eines Speichersystems
Procédé de configuration d'un système mémoire

(30) Priority: 17.09.1990 US 583283
(43) Date of publication of application: 02.09.1992
(73) Proprietor: SAMSUNG SEMICONDUCTOR, INC., San Jose, CA 95134 (US)
(72) Inventor: SPONRING, Otto, San Jose, CA 95248 (US)
(74) Representative: Zenz, Joachim Klaus, Dipl.-Ing.
(86) International application number: US9106714
(87) International publication number: WO9205491

(56) References cited:
- EP-A- 0 051 905
- US-A- 4 234 934
- US-A- 4 330 825
- US-A- 4 354 258
- US-A- 4 566 082
- US-A- 4 809 234
- US-A- 4 908 789
- US-A- 4 951 248
- US-A- 5 012 408
- US-A- 5 027 313
- IBM TECHNICAL DISCLOSURE BULLETIN. vol. 29, no. 3, August 1986, NEW YORK US page 1381 'Memory presence detect'

## Description

### 1. FIELD OF THE INVENTION

This invention relates to the field of multiple bank dynamic random access memory (DRAM) systems and in particular to a method for identifying bank memory size.

### 2. BACKGROUND ART

A computer system consists of a number of modules or components. Computer systems typically include a central processing unit (CPU) such as a microprocessor. The microprocessor is a program-controlled device that obtains, decodes and executes instructions. A computer system also includes program storage components for storing program instructions, and data storage components for storing data. These storage components may be read only memory (ROM), random access memory (RAM), disc or tape storage, or any other suitable storage means.

A computer system also includes input/output (I/O) components for connecting external devices to the microprocessor. Special purpose components, such as memory management units or co-processors may also be part of the computer system.

The memory component, also known as a "main memory", is a scarce resource that is dynamically allocated to users, programs, or processes. Main memory is typically a silicon based memory such as a random access memory (RAM). In many prior art applications, dynamic random access memory (DRAM) is used as the main memory.

A disadvantage of the use of DRAM as main memory for a CPU or other processor are limitations on the memory access time. As microprocessor technology has improved, the clock rate of operation of the microprocessor has increased. This increases the memory access time requirements of the main memory associated with the microprocessor. The access time of DRAM has not kept pace with the requirements of present microprocessor technology. For example, 16 and 32 bit microprocessors may require memory access rates of 20 to 40 nanoseconds. Present day DRAM has access times of 60 to 80 nanoseconds. To satisfy the access requirements of present-day microprocessors, memory caching schemes or page access schemes are utilized.

Memory caching schemes have the disadvantage of higher cost due to the use of static RAM (SRAM) components. In addition, caching schemes suffer from performance penalties in task switching environments and from physical to virtual address conversion time penalties.

One memory scheme used to achieve high performance without the cost, task switching or conversion penalties of caching schemes is known as "bank switching". This scheme utilizes a number of banks of DRAM and interleaves access to the DRAMs to "hide" the precharge time of individual banks. One such scheme is described in U. S. patent application number 604,785 entitled "METHOD AND APPARATUS FOR PAGE PREDICTION OF MULTIPLE PAGE DRAM", filed on October 26, 1990, assigned to the assignee of the present invention and published as EP 482 575 A.

It is often desired to configure the memory banks to provide various sizes for different applications. In the prior art, this is accomplished by providing additional I/O ports and selecting memory configuration using software. This adds expense and requires complex controller circuitry.

US 4908789 A discloses a method and system for configuring a memory system using modules of different capacities, based on size information provided as a code by the modules.

IBM Technical Disclosure Bulletin Vol. 29, No. 3, August 1986, page 1381 'Memory presence detect' describes the detection of module presence by reading an address bus which may have certain pins tied to a fixed voltage level to indicate empty/full memory sockets.

It is an object of the present invention to provide a method for identifying different memory sizes in a multiple bank DRAM environment.

It is another object of the present invention to provide a method allowing the use of different memory sizes using a single memory controller.

### SUMMARY OF THE PRESENT INVENTION

A method by which a memory controller determines memory size in an interleaved multiple bank DRAM memory system is described. The method ensures that an associated CPU can access a contiguous memory array. The offset to the next bank is identified with the memory size. In a preferred embodiment a memory controller that is capable of controlling a given size DRAM identifies memory below a maximum size by asserting a high or low level on the most significant address pins. By reading the address pins as input, the controller can determine that memory space is not available on the higher address locations and the offset for the next bank can be determined.

### BRIEF DESCRIPTION OF THE DRAWINGS

Figure 1 is a block diagram of an environment in which the present invention may be performed.
Figure 2 is a block diagram of a memory array configuration suitable for use with the present invention.
Figure 3 is a detailed block diagram of the controller of Figure 1.
Figure 4 is a block diagram of a possible memory bank configuration.
Figure 5 is a flow diagram of the operation of an embodiment of this invention.

### DETAILED DESCRIPTION OF THE INVENTION

A method for memory size identification for configuring a multiple bank DRAM memory system is described. In the following description, numerous specific details such as number of bits, number of memory banks, etc. are set forth in detail in order to provide a more thorough description of the invention. It will be apparent, however, to one skilled in the art, that the present invention may be practiced without these specific details. In other instances, well-known features have not been described in detail so as not to unnecessarily obscure the present invention.

A microprocessor or central processing unit (CPU) is a device for obtaining, decoding and executing instructions. A microprocessor requires an associated memory to hold information. This memory is referred to as "main memory" and is used to hold instruction sequences (programs) and to store data. Two characteristics that affect the performance of a microprocessor memory system are capacity and speed.

The speed of a memory depends on the "access time", "write time', and "memory cycle time". The "access time" of a memory corresponds to the time required to provide a read control signal to the memory and apply the address bits to memory, until the output of the memory is valid. "Write time" is the time between the sending of a write signal to memory and when new data has been written to the memory. "Memory cycle time" is the time period required to complete a specific memory function, such as a read/write operation, a read/read operation, a write/write operation, or a write/read operation.

Main memory in a computer system has a logical organization and a physical organization. The physical organization of the main memory of a computer system typically consists of a memory array coupled to a computer system bus for communication with a microprocessor and other computer system components. Each address location in the main memory is accessed by a "physical address". The physical main memory location in which informational items may be stored is called the physical address space or the physical memory space.

An address used by or generated by a program to specify a particular informational item is called a "logical address." The set of logical addresses used by a program to identity informational items is called the "logical address space." The logical organization of a memory must include a mapping means for converting a logical address space to a physical address space. (It should be noted that the logical address space need not be equal to the physical address space.)

In many applications, it is desired to provide a greater logical address space than the physical address space of main memory. This is accomplished through a technique known as "virtual memory." In a virtual memory scheme, the logical address space is represented in the physical main memory and in secondary mass storage such as hard disk drives or floppy disk drives. A virtual memory scheme requires a mechanism to determine whether an addressed element resides in physical memory or in secondary mass storage. When an addressed item does not reside in physical memory, it must be transferred from secondary storage in a process known as "swapping".

A memory paging scheme permits main memory to be allocated in small blocks of equal size called "page frames". A "page" (set of contiguous logical addresses) fits within a page frame. Paging permits the implementation of a logical address space larger than the installed physical memory. If a reference page is missing from a physical memory, it is swapped in from secondary storage as a single unit; that is, the entire page is swapped into physical memory.

Many computer applications, particularly those in the personal computer environment, require the use of different sizes of physical memory (DRAM) for efficient operation. The maximum memory size that is addressable by a memory controller depends on the number of pins available. If a memory size less than the maximum is used, certain of the pins (the most significant address bits) are not used. Separate and additional I/O pins are provided for software control of memory selection, adding to device complexity and expense.

The present invention is a method for configuring an interleaved multiple bank DRAM memory system as defined in claim 1.

Multiple banks of DRAM's are interleaved to reduce the effective cycle time of the DRAM. An interleaving scheme can provide improved operation if the memory accesses are sequential. The interleave scheme is used to "hide" the precharge time of the DRAM's (which affects access time) for sequential addressing.

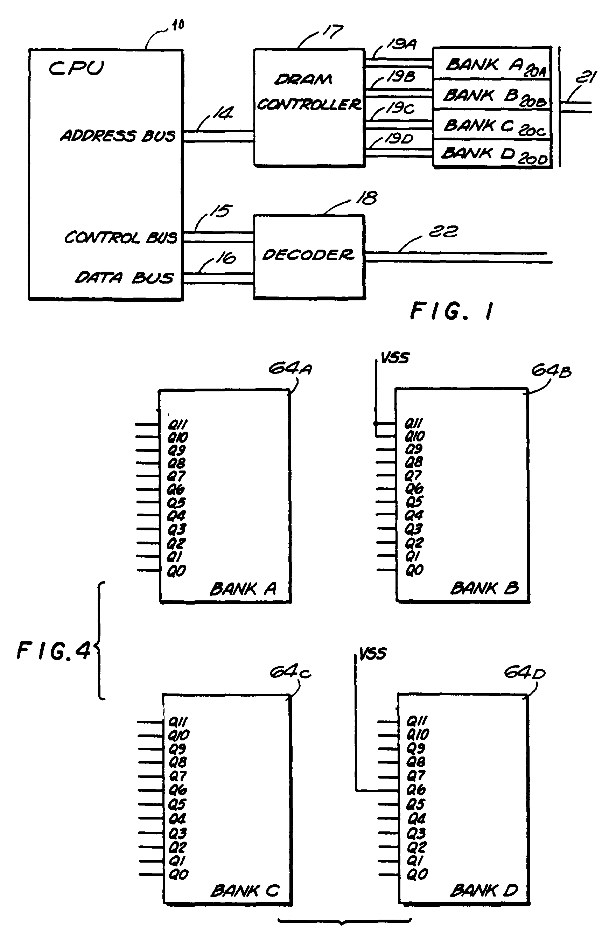

A block diagram of the environment of the present invention is illustrated in Figure 1. A microprocessor or CPU 10 includes an address bus 14, control bus 15 and data bus 16. The address bus 14 is coupled to a DRAM controller 17. The memory controller 17 permits the definition of various size memory arrays without the need for additional I/O lines. The DRAM controller communicates on buses 19A-19D with DRAM memory banks 20A -20D, respectively. The control bus 15 and data bus 16 are coupled to a decoder 18 which provides output on bus 22. The DRAM memory banks communicate with an auxiliary memory on bus 21.

The four memory banks are driven by four independent channels 19A-19D. The memory array is between 1 and 256 megabytes in the present embodiment but can be any suitable size. Each DRAM can be 256 k bit, 1 megabit, 4 megabit or 16 megabit. While one of the memory banks is accessed, the three remaining banks are loaded in advance in order to avoid wait states when the program advances from the current bank or page. The memory banks are interleaved so that the physical addresses on any given page of memory are stacked above each other. An example of the memory organization of the DRAM memory banks is as follows. In this example, a 256k x 4 DRAM having a 9 bit wide row address equivalent to 512 pages is utilized:

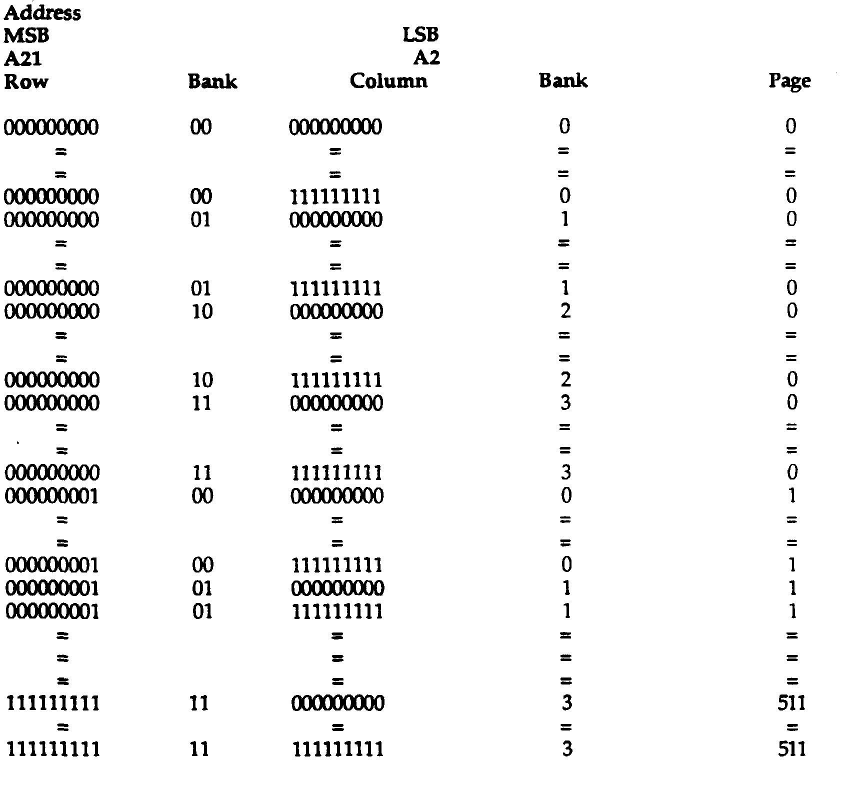

A high hit rate is accomplished by mapping the address space in contiguous banks so that a linearly progressing program will access distinguished pages. Therefore, a page change will not result in a wait state for precharging the memory.

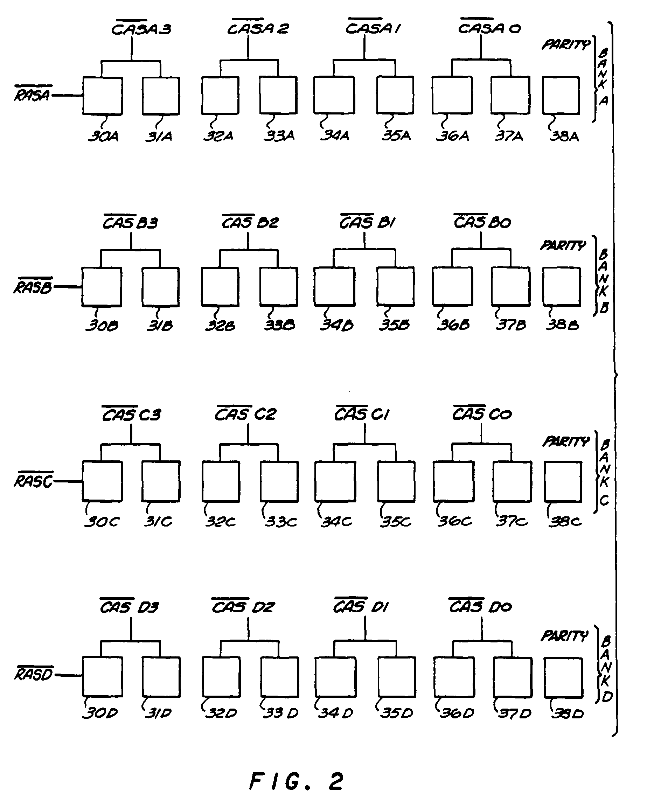

A memory configuration which may be used with the present invention is illustrated in Figure 2. In this example, the memories are divided into four separate arrays of 9 memories each, identified as bank A through D. Bank A contains memories 30A-38A; Bank B contains memories 30B-38B; Bank C includes memories 30C-38C, and Bank D includes memories 30D-38D. Each memory can be 64 kilobits by 4, 256 kilobits by 4 or one megabyte x 4. Memories 38A-38D receive parity bits for data validation.

Row address select signals RASA-RASD are provided to memory banks A-D respectively, to select a row in the memory array. Column select signals then select the appropriate column so the desired memory element may be read. Referring to bank A, column select signals CASA 0-CASA 3 are provided. CASA 0 is coupled to memory banks 36A and 37A. Signal CASA 1 is coupled to banks 34A and 35A. Signal CASA 2 is coupled to banks 32A and 33A. Signal CASA 3 is coupled to banks 30A and 31A. Similarly, column select signals CAS B0 - B3 are provided to the memories of bank B; signal CAS C0-C3 are provided to bank C, and signal CAS D0-D3 are provided to bank D.

### MEMORY CONTROLLER

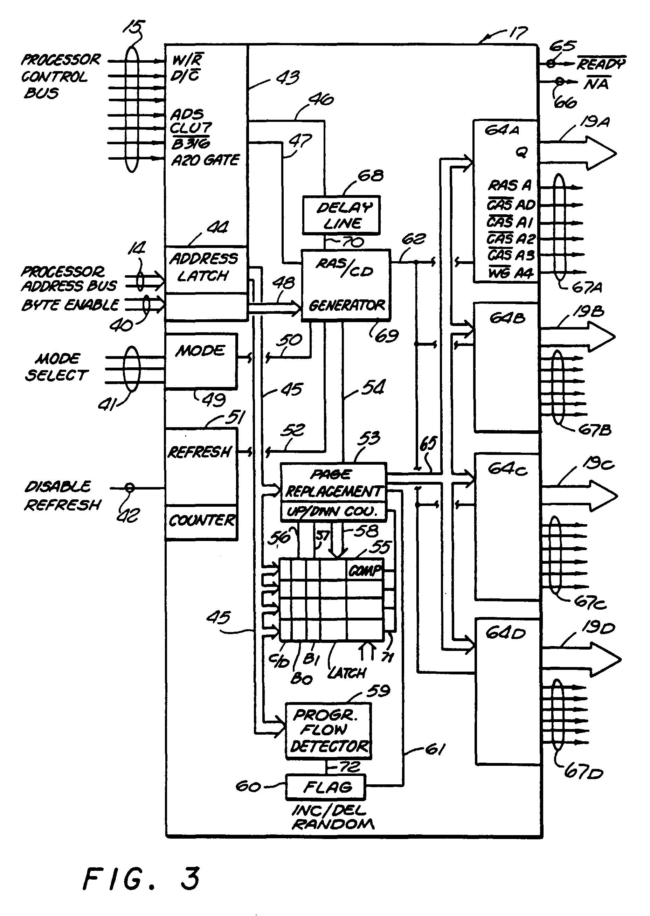

A detailed view of the DRAM controller 17 of Figure 1 is illustrated in Figure 3. The DRAM controller 17 is coupled to the processor control bus 15. The processor control bus 15 provides control signals to control block 43. The signals include W/R, D/C. M/O, Reset, ADS, Clock, RS16, and A20 gate signals. The processor address bus 14 provides address information to address latch 44. The control block 43 provides output signal 46 to delay line block 68 and signal 47 to the RAS/CAS generator block 69. The delay line block 68 provides output signal 70 to the RAS/CAS generator block 69. A byte enable signal 40 provided by a microprocessor is also coupled to the control block 17 and is provided as signal 48 to the RAS/CAS generator block 69. The address latch 44 provides output 45 to a page replacement block 53, logic block 55 and program flow detector block 59.

Mode select signals 41 are provided to mode control block 49. Mode control block 49 provides an output 50 to RAS/CAS generator block 69. A disable refresh signal 42 is provided to refresh block 51. Refresh block 51 includes a counter so that appropriate rows and columns can be refreshed as desired. The refresh block 51 provides an output signal 52 to the RAS/CAS generator block 69. The RAS/CAS generator block 69 is also coupled on line 54 to replacement block 53. The page replacement block 53 includes an up/down counter and provides outputs 56, 57, and 58 to logic block 55. The program flow detector block 59 provides an output signal 72 to flag block 60. Flag block 60 provides an increment/decrement signal 61 to page replacement block 53. Logic block 55 provides output signal 71 to the up/down counter of page replacement block 53.

The RAS/CAS generator block 69 provides output 62 to output blocks 64A, 64B, 64C and 64D. The page replacement block 53 provides output on bus 65 to output blocks 64A-64D, respectively. The output blocks 64A-64D provide address information on Q busses 19A-19D respectively, to memory banks A through D. The output blocks 64A-64D also provide the row address signals, column address signals CAS 0-CAS 3 for each of the memory banks and a write enable signal.

Each Q bus, for example, is 12 bits wide and can address a maximum of 16 megabits in a memory bank. If a memory bank is resized to a smaller size than the maximum, then certain of the Q lines are not used. The present invention provides a method for using these unused address lines to convey memory sizing information to the controller.

The memory depth used with the embodiments of this invention is selectable for each individual bank from 16K to 16 megabits. The memory of banks B, C and D is mapped to contiguous boundaries to achieve a linear address space for improved operation. Size selection is accomplished by connecting unused Q outputs to VCC or VSS. After power up or reset, the controller asserts a current on the five highest order Q outputs (Q7-Q11). By reading the input, the controller can determine the memory size and the offset for each bank The offset is a function of the memory depth and is equal to memory size multiplied by memory width. This is a cost effective way to provide various memory sizes and to allow upgrades without having to replace existing memory devices.

If a memory bank is not populated at all, Q6 is tied to VSS. In such a case, Q7-Q11 can be left open. The banks populate in sequential order and may not have a gap in between. The memory organization can be by eight, by four and by one.

Referring now to Figure 1, consider where banks A, B, C and D are each 1 megabit DRAM's. A user wishes to upgrade bank B to 4 megabits. This invention provides a method for configuring the mapping of the memories by the DRAM controller.

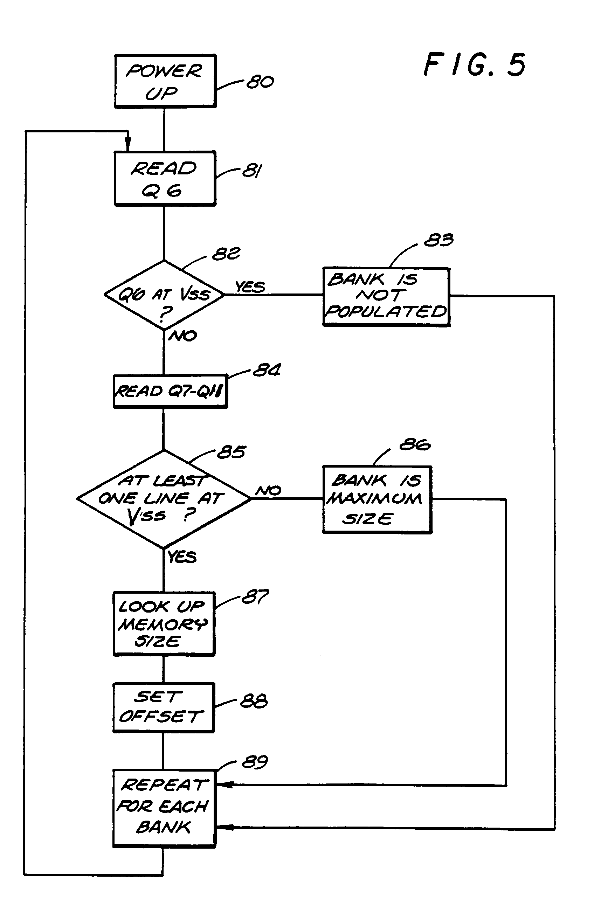

Referring to Figure 4, banks 64A-64D each have 12 bit Q lines 19A-19D, respectively. For bank A, a 16 megabit bank, all 12 address lines are used. For bank B, only 10 bits are used because only 1 megabit of memory is addressed. The unused address bits are used to provide information about the memory mapping. Lines Q10-Q11 of bank B are tied to VSS. Only the address lines Q0-Q9 of bank B are utilized.

Bank D is not populated at all. Therefore, address line Q6 is tied to VSS. This embodiment utilizes this convention to indicate that the bank is not populated. Any single one of the the Q lines can be set to VSS to indicate this state, or any combination of Q lines can be utilized without departing from the scope of this invention. Alternatively, each line Q0-Q11 can be coupled to VSS to indicate that the bank is unpopulated.

In operation, the memory controller executes an algorithm on power-up to determine the memory size of the DRAM banks. This algorithm is illustrated in the flow diagram of Figure 5. At step 80, the DRAM and DRAM controller are powered up. At step 81, the DRAM controller reads line Q6 of the first memory bank, bank A.

At decision block 82, the argument "Is Q6 at VSS?" is made. If the argument at decision block is true, the system proceeds to step 83 and the memory controller identifies block A as not populated. If the argument at decision block 82 is false, the system proceeds to step 84. At step 84, the address lines Q7-Q11 are polled.

At decision block 85, the argument "Is at least one line of lines Q7-Q11 at VSS?" is made. If the argument at decision block 85 is false, (i.e. none of the lines Q7-Q11 are at VSS), the system proceeds to step 86 and the bank is identified as being of maximum size.

If the argument at decision block 85 is true, the system proceeds to step 87 and the memory of the memory block is determined by identifying which Q lines are at VSS and referring to a table to locate memory size. At step 88, the offset for the memory is determined based on the memory size. Steps 83, 86 and 88 all proceed to step 89. At step 89, the process is repeated for each memory bank.

The memory size and offset for each memory bank is determined by referring to Table 1 below:

**Table 1**

| Q lines at VSS | Memory Size | Offset |
|---|---|---|
| Q11 | 4 Meg | 4 Meg x Memory Width |
| Q11, Q10 | 1 Meg | 1 Meg x Memory Width |
| Q11, Q10, Q9 | 256K | 256K x Memory Width |
| Q11, Q10, Q9, Q8 | 64K | 64K x Memory Width |
| Q11, Q10, Q9, Q8, Q7 | 16K | 16K x Memory Width |

Thus, a method for sizing configuration of a multiple bank DRAM 5 has been described.

## Claims

1. A method of configuring an interleaved multiple bank DRAM memory system, said memory system comprising a memory controller (17) and at least two memory banks (20A-20D) of DRAM devices, each of said memory banks being coupled by a separate addressing bus (19A-19D) to said memory controller,
each of said addressing buses comprising a number of bit lines (Q0-Q11), said number of bit lines corresponding to the maximum size of a memory bank, wherein
a) at least one of said memory banks is populated with DRAM devices, wherein the DRAM devices of each single memory bank are of equal size but the DRAM devices of different memory banks can be of different sizes;
b) depending on the size of the DRAM devices in a memory bank at least one of any unused most significant bit lines of each respective addressing bus (19A-19D) is coupled to a fixed voltage level, so that the voltage levels of the bit lines form a unique indication of the size of the DRAM devices;
c) said memory controller (17) configuring the addressable memory space by:
c1) determining for each memory bank, which lines of the corresponding addressing bus (19A-19D) are at said fixed voltage level, thereby determining said unique indication;
c2) generating a table address for each memory bank, said table address being dependent on said unique indication;
c3) reading, for each memory bank, an entry in a table by means of said table address, said entry identifying the memory size of the corresponding memory bank and an offset to the next bank; and
c4) mapping the memory space of said at least two memory banks to contiguous boundaries to achieve a linear address space.

2. The method of claim 1, characterized in that
at least one of the memory banks (20A-20D) is not populated with DRAM devices and
at least one of the bit lines (Q0-Q11) of the memory bank not populated with DRAM devices is coupled to a fixed voltage level, so that a unique indication is generated, the memory controller identifying from said indication that this memory bank is not populated with DRAM devices.

3. The method of claim 1, characterized in that all unused most significant bit lines are coupled to said fixed voltage level.

4. The method of claim 3, characterized in that
at least one of the memory banks is not populated with DRAM devices, and
one bit line of the memory bank not populated with DRAM devices is coupled to a fixed voltage level, said one bit line being the most significant bit line used in a memory bank populated with lowest sized DRAM devices, so that an indication is generated, the memory controller identifying from said indication that the memory bank is not populated with DRAM devices.

5. The method of claim 4, characterized in that the memory controller identifies said size of the DRAM devices as 4^{N}*16 Kbit, wherein N = 0...5,
said addressing bus is 12 bits wide and
said one bit line is the seventh order bit line (Q6), which is the most significant addressing bus bit line used in a memory bank populated with 16 Kbit DRAM devices.

## Patentansprüche

1. Ein Verfahren zum Konfigurieren eines mehrere verschachtelte Bänke aufweisenden DRAM-Speichersystems, wobei das Speichersystem eine Speichersteuereinrichtung (17) und wenigstens zwei Speicherbänke (20A-20D) von DRAM-Bauelementen aufweist, wobei jede der Speicherbänke durch einen separaten Adressierbus (10A-19D mit der Speichersteuereinrichtung gekoppelt ist,
wobei jeder der Adressierbusse eine Anzahl von Bitleitungen (Q0-Q11) aufweist, wobei die Anzahl der Bitleitungen der Maximalgröße einer Speicherbank entspricht, wobei
a) wenigstens eine der Speicherbänke mit DRAM-Bauelementen bestückt wird, wobei die DRAM-Bauelemente jeder einzelnen Speicherbank von gleicher Größe sind, aber die DRAM-Bauelemente verschiedener Speicherbänke von verschiedener Größe sein können;
b) in Abhängigkeit von der Größe der DRAM-Bauelemente in einer Speicherbank wenigstens eine von den ungenutzten am höchsten bewerteten Bitleitungen des jeweiligen Adressierbusses (19A-19D) derart mit einem feststehenden Spannungspegel gekoppelt wird, daß die Spannungspegel der Bitleitungen eine eindeutige Anzeige der Größe der DRAM-Bauelemente bilden;
c) die Speichersteuereinrichtung (17) den adressierbaren Speicherraum konfiguriert, indem:
c1) für jede der Speicherbänke bestimmt wird, welche Leitungen des zugehörigen Adressierbusses (19A-19D) sich auf dem feststehenden Spannungspegel befinden, wodurch die eindeutige Anzeige bestimmt wird;
c2) eine Tabellenadresse für jede Speicherbank erzeugt wird, wobei die Tabellenadresse von der eindeutigen Anzeige abhängig ist;
c3) für jede Speicherbank ein Eintrag in einer Tabelle mit Hilfe der Tabellenadresse gelesen wird, wobei der Eintrag die Speichergröße der zugehörigen Speicherbank und ein Offset zu der nächsten Bank identifiziert; und
c4) der Speicherraum der wenigstens zwei Speicherbänke auf zusammenhängende Grenzen abgebildet wird, um einen linearen Adreßraum zu erreichen.

2. Das Verfahren nach Anspruch 1, dadurch gekennzeichnet, daß wenigstens eine der Speicherbänke (20A-20D) nicht mit DRAM-Bauelementen bestückt wird, und
daß wenigstens eine der Bitleitungen (Q0-Q11) der nicht mit DRAM-Bauelementen bestückten Speicherbank mit einem feststehenden Spannungspegel gekoppelt wird, so daß eine eindeutige Anzeige erzeugt wird, wobei die Speichersteuereinrichtung aus der Anzeige identifiziert, daß diese Speicherbank nicht mit DRAM-Bauelementen bestückt ist.

3. Das Verfahren nach Anspruch 1, dadurch gekennzeichnet, daß sämtliche nicht benutzten am höchsten bewerteten Bitleitungen mit dem feststehenden Spannungspegel gekoppelt werden.

4. Das Verfahren nach Anspruch 3, dadurch gekennzeichnet,
daß wenigstens eine der Speicherbänke nicht mit DRAM-Bauelementen bestückt wird, und
daß eine der Bitleitungen der nicht mit DRAM-Bauelementen bestückten Speicherbank mit einem feststehenden Spannungspegel gekoppelt wird, wobei die eine Bitleitung die am höchsten bewertete Bitleitung von denjenigen Bitleitungen ist, die bei einer mit DRAM-Bauelementen geringster Größe bestückten Speicherbank verwendet wird, so daß eine Anzeige erzeugt wird, wobei die Speichersteuereinrichtung aus dieser Anzeige identifiziert, daß die Speicherbank nicht mit DRAM-Bauelementen bestückt ist.

5. Das Verfahren nach Anspruch 4, dadurch gekennzeichnet, daß die Speichersteuereinrichtung die Größe der DRAM-Bauelemente als 4^{N}*16 Kbit identifiziert, wobei N = 0 ... 5 ist,
wobei der Adressierbus 12 Bits breit ist, und
wobei die eine Bitleitung die Bitleitung (Q6) siebter Ordnung ist, welche die am höchsten bewertete Adressierbus-Bitleitung ist, die bei einer mit 16 Kbit-DRAM-Bauelementen bestückten Speicherbank verwendet wird.

## Revendications

1. Procédé de configuration d'un système de mémoires DRAM à batteries multiples imbriquées, ce système de mémoires comprenant un régisseur de mémoire (17) et au moins deux batteries (20A à 20D) de boîtiers DRAM, chacune de ces batteries étant reliée au régisseur de mémoire par un bus d'adressage séparé (19A à 19D),
chacun des bus d'adressage comprenant un certain nombre de lignes de bit (Q0 à Q11), ce nombre de lignes de bit correspondant à la taille maximale d'une batterie de mémoires, dans lequel
a) au moins une des batteries de mémoires est peuplée de boîtiers DRAM, les boîtiers DRAM de chaque batterie de mémoires étant de même taille, mais les boîtiers DRAM de batteries différentes de mémoires pouvant être de tailles différentes,
b) suivant la taille des boîtiers DRAM d'une batterie de mémoires, au moins une des éventuelles lignes de bits de plus fort poids inutilisées de chaque bus d'adressage respectif (19A à 19D) est mise à un niveau de tension fixe, de sorte que les niveaux de tension des lignes de bit forment une indication unique de la taille des boîtiers DRAM,
c) le régisseur de mémoire (17) configurant l'espace de mémoire adressable en
c1) déterminant pour chaque batterie de mémoires quelles lignes du bus d'adressage correspondant (19A à 19D) sont au niveau de tension fixe, déterminant par là l'indication unique,
c2) produisant une adresse de table pour chaque batterie de mémoires, cette adresse de table dépendant de l'indication unique,
c3) lisant pour chaque batterie de mémoires un article d'une table au moyen de l'adresse de table, cet article identifiant la taille de mémoire de la batterie de mémoires correspondante et un décalage de la batterie suivante, et
c4) topographiant l'espace mémoire des au moins deux batteries de mémoires jusqu'à des limites contiguës pour réaliser un espace d'adressage linéaire.

2. Procédé selon la revendication 1, caractérisé par le fait que
au moins une des batteries de mémoires (20A à 20D) n'est pas peuplée de boîtiers DRAM et
au moins une des lignes de bit (Q0 à Q11) de la batterie de mémoires non peuplée de boîtiers DRAM est mise à un niveau de tension fixe, de sorte qu'est produite une indication unique, le régisseur de mémoire identifiant à partir de cette indication que cette batterie de mémoires n'est pas peuplée de boîtiers DRAM.

3. Procédé selon la revendication 1, caractérisé par le fait que toutes les lignes de bits de plus fort poids non utilisées sont mises au niveau de tension fixe.

4. Procédé selon la revendication 3, caractérisé par le fait que
au moins une des batteries de mémoires n'est pas peuplée de boîtiers DRAM et
une ligne de bit de la batterie de mémoires non peuplée de boîtiers DRAM est mise à un niveau de tension fixe, cette ligne de bit étant la ligne de bit de plus fort poids utilisée dans une batterie de mémoires peuplée de boîtiers DRAM de plus faible taille, de sorte qu'est produite une indication, le régisseur de mémoire identifiant à partir de cette indication que la batterie de mémoires n'est pas peuplée de boîtiers DRAM.

5. Procédé selon la revendication 4, caractérisé par le fait que le régisseur de mémoire identifie la taille des boîtiers DRAM sous la forme 4^{N}*16 kilobits, avec N = 0 à 5,
le bus d'adressage est à 12 bits et
ladite ligne de bit est la ligne de bit de septième ordre (Q6), qui est la ligne de bit de bus d'adressage de plus fort poids utilisée dans une batterie de mémoires peuplée de boîtiers DRAM à 16 kilobits..
